(19) Europäisches Patentamt
European Patent Office
Office européen des brevets

(11) **EP 3 759 517 B1**

(12) **EUROPÄISCHE PATENTSCHRIFT**

(45) Veröffentlichungstag und Bekanntmachung des Hinweises auf die Patenterteilung:
**01.05.2024   Patentblatt 2024/18**

(21) Anmeldenummer: **19708511.1**

(22) Anmeldetag: **01.03.2019**

(51) Internationale Patentklassifikation (IPC):
*G01S 7/41* (2006.01)     *G01S 13/58* (2006.01)
*G01S 13/91* (2006.01)     *G01S 13/92* (2006.01)
*G01S 13/46* (2006.01)     *G01S 13/50* (2006.01)

(52) Gemeinsame Patentklassifikation (CPC):
**G01S 13/46; G01S 7/411; G01S 7/415; G01S 13/50; G01S 13/91;** G01S 13/589; G01S 13/92

(86) Internationale Anmeldenummer:
**PCT/EP2019/055114**

(87) Internationale Veröffentlichungsnummer:
**WO 2019/166614 (06.09.2019 Gazette 2019/36)**

(54) **VERFAHREN UND VORRICHTUNG ZUR SCHÄTZUNG DER HÖHE EINES REFLEKTORS EINES FAHRZEUGS**

METHOD AND DEVICE FOR ESTIMATING THE HEIGHT OF A REFLECTOR OF A VEHICLE

PROCÉDÉ ET DISPOSITIF D'ESTIMATION DE LA HAUTEUR D'UN RÉFLECTEUR D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.03.2018   DE 102018104808**

(43) Veröffentlichungstag der Anmeldung:
**06.01.2021   Patentblatt 2021/01**

(73) Patentinhaber: **Jenoptik Robot GmbH 40789 Monheim (DE)**

(72) Erfinder:
• **PRÖFROCK, Dima 22607 Hamburg (DE)**
• **TRUMMER, Michael 31137 Hildesheim (DE)**

(74) Vertreter: **Waldauf, Alexander Jenoptik AG Carl-Zeiß-Straße 1 07743 Jena (DE)**

(56) Entgegenhaltungen:
EP-A1- 2 674 776          CN-A- 105 047 020
DE-A1-102012 107 445     DE-A1-102013 019 803
DE-A1-102016 014 060

**Beschreibung**

Die Erfindung betrifft ein Verfahren sowie eine Vorrichtung zur Schätzung der Höhe eines Reflektors eines Fahrzeugs. Gegenstand der vorliegenden Erfindung ist auch ein Computerprogramm.

Ein Radargerät kann die relative Geschwindigkeit einzelner Reflektoren eines Fahrzeugs sowie deren Position in x-y-Koordinaten bestimmen. Die relative Geschwindigkeit ist hierbei die Geschwindigkeit eines Reflektors in Relation zum Radargerät. Die bisher eingesetzten Radarsysteme werten allerdings nicht die Objekthöhe der Reflektoren aus. Es wird von einer pauschalen Objekthöhe ausgegangen, beispielsweise 1 Meter über dem Fahrbahngrund, und mit der bekannten Installationshöhe des Radargeräts verrechnet. Dadurch ergeben sich verschiedene Nachteile. Durch die unbekannte Höhe des Reflektors kann die gemessene Relativgeschwindigkeit nicht korrekt in die absolute Objektgeschwindigkeit umgerechnet werden. Je nachdem, ob die angenommene Objekthöhe zu hoch oder zu niedrig ist, kann auch die berechnete Objektgeschwindigkeit zu niedrig oder zu hoch sein. Hohe Objekte, beispielsweise Lastkraftwagen, weichen stark von der pauschalen Objekthöhenannahme von einem Meter ab, sodass der Geschwindigkeitsmessfehler außerhalb der 3% Toleranzgrenze liegt. Eine Höhenabschätzung für den Reflektor eines Fahrzeugs ist also sehr hilfreich, um die Ansprüche an die Güte der Geschwindigkeitsmessung zu erfüllen. Eine Höhenschätzung ist weiterhin für die Klassifikation von Fahrzeugen sehr hilfreich, da die Fahrzeugklasse (z. B. PKW oder LKW) stark mit der Höhe korreliert.

Die DE 10 2016 014 060 A1 offenbart ein Verfahren zur radarbasierten Bestimmung einer Höhe eines Objekts. Die CN 105 047 020 A offenbart ein Verfahren zur Bestimmung der Höhe eines Objekts (Brücke) mittels eines Radargerätes eines Fahrzeuges, wobei die Höhe trigonometrisch bestimmt wird.

Vor diesem Hintergrund werden mit dem hier vorgestellten Ansatz ein Verfahren zur Schätzung der Höhe eines Reflektors eines Fahrzeugs sowie eine Vorrichtung zur Schätzung der Höhe eines Reflektors eines Fahrzeugs gemäß den Hauptansprüchen vorgestellt. Vorteilhafte Ausgestaltungen und Weiterbildungen der Erfindung ergeben sich aus den nachfolgenden Unteransprüchen.

Der hier vorgestellte Verfahrensansatz ermöglicht die Abschätzung und/oder Messung von einer Höhe zumindest eines und/oder einer Mehrzahl von Reflektoren eines Fahrzeugs unter Berücksichtigung verschiedener Modellannahmen. Vorteilhafterweise ergeben sich aus diesem Verfahrensansatz eine verbesserte Fahrzeugklassifikation und eine genauere Messung einer Fahrzeuggeschwindigkeit.

Es wird ein Verfahren zur Schätzung der Höhe eines Reflektors eines Fahrzeugs vorgestellt, wobei das Verfahren die folgenden Schritte aufweist:

Einlesen zumindest eines Reflexionssignals von dem Reflektor des Fahrzeugs zu einem Zeitpunkt, wobei das zumindest eine Reflexionssignal zumindest eine Information zu einer relativen Geschwindigkeit des Fahrzeugs repräsentiert;

Vorgeben eines Geschwindigkeitsschätzwertes des Fahrzeugs; und

Ermitteln eines Höhenschätzwertes des Reflektors unter Verwendung der relativen Geschwindigkeit des Fahrzeugs und des Geschwindigkeitsschätzwertes des Fahrzeugs.

Bei einem Reflektor kann es sich um einen Rückstrahler oder eine Abstrahlfläche bzw. einen Abstrahlbereich der Karosserie des Fahrzeugs handeln, der/die fest an einem Fahrzeug angeordnet ist und die Strahlen eines einfallenden Lichts bevorzugt in die Richtung der Strahlungsquelle zurückwirft. Insbesondere kann der Reflektor hierbei ausgebildet sein, ein Sendesignal einer Sendeeinrichtung in Form eines Reflexionssignals zu reflektieren. Der Reflektor kann beispielsweise aus ebenen Spiegeln oder einem anderen für einen Sendestrahl reflektierendem Material gefertigt sein. Bei dem Fahrzeug kann es sich um ein Fahrzeug zur Personenbeförderung, beispielsweise ein hochautomatisiert fahrendes Fahrzeug, einen Bus oder einen Lastkraftwagen, oder aber auch einen Kleintransporter handeln. Bei dem Geschwindigkeitsschätzwert kann es sich um einen Wert einer groben (Initial-)Schätzung einer Geschwindigkeit eines Fahrzeugs handeln. Der Geschwindigkeitsschätzwert kann hierbei einer Ermittlung eines Höhenschätzwertes des Reflektors dienen. Bei dem Höhenschätzwert kann es sich um einen geschätzten Wert einer Höhe eines Reflektors eines Fahrzeugs handeln, den es im Verlauf des Verfahrens zur Schätzung der Höhe eines Reflektors eines Fahrzeugs zu ermitteln bzw. zu schätzen gilt.

Der hier vorgestellte Verfahrensansatz zur Schätzung der Höhe eines Reflektors eines Fahrzeugs kann einschließen, dass das Fahrzeug zumindest einen Reflektor in Straßennähe aufweist. Ferner kann auch eine Mehrzahl an Reflektoren pro Messung verwendet werden. Es können die Reflexionen der Reflektoren über mehrere zeitlich versetzte Messungen gesammelt und verwendet werden, wobei eine konstante Fahrzeuggeschwindigkeit vorausgesetzt wird. Für die Implementierung des Verfahrens wird insbesondere ausgenutzt, dass der Geschwindigkeitsfehler durch eine falsch angenommene Reflektorhöhe in Radarnähe stark ist und mit größerer Entfernung zum Radar asymptotisch gegen Null strebt. Der Verlauf der asymptotischen Funktion wird beispielsweise per Regression bestimmt und die Höhenschätzung kann auf diese Weise schon radarnah erfolgen, vorausgesetzt eine Fahrzeuggeschwindigkeit ist konstant.

Gemäß einer Ausführungsform kann im Schritt des Einlesens das Reflexionssignal ferner eine Information zu einem relativen Abstand des Fahrzeugs zu einer signalaussendenden Sendeeinrichtung und/oder zu einen Höhenwinkel, in dem der Reflektor zu der signalaussendenden Sendevorrichtung angeordnet ist, repräsentieren, wobei im Schritt des Ermittelns der Höhenschätzwert des Reflektors ferner unter Verwendung der Information zu dem relativen Abstand des Fahrzeugs zu der signalaussendenden Sendeeinrichtung und/oder dem Höhenwinkel, in dem der Reflektor zu der signalaussendenden Sendevorrichtung angeordnet ist, ermittelt wird. Die signalaussendende Sendevorrichtung sendet hierbei ein Sendesignal aus, dessen Reflexion das Reflexionssignal bildet. Eine solche Ausführungsfrom des hier vorgestellten Ansatzes bietet den Vorteil einer besonders präzisen Schätzung der Höhe des Reflektors.

Ferner kann im Schritt des Einlesens zumindest ein zweites Reflexionssignal von dem Reflektor des Fahrzeugs zu einem zweiten Zeitpunkt eingelesen werden, wobei das zweite Reflexionssignal hierbei ebenfalls zumindest eine Information zu einer relativen Geschwindigkeit des Fahrzeugs repräsentiert und wobei im Schritt des Ermittelns der Höhenschätzwert des Reflektors ferner unter Verwendung der Information zu der relativen Geschwindigkeit des Fahrzeugs aus dem zweiten Reflexionssignal ermittelt wird. Eine solche Ausführungsform des hier vorgestellten Ansatzes biete den Vorteil, dass durch die Verarbeitung zumindest eines zweiten Reflexionssignals desselben Reflektors, das nach einem zeitlichen Versatz nach (oder vor) dem ersten Reflexionssignal eingelesen und verarbeitet wird, eine weitere Verbesserung und Verifizierung der Höhenschätzung des Reflektors ermöglicht wird.

Zudem kann mit einem Schritt des Überprüfens überprüft werden, ob der Höhenschätzwert innerhalb eines Toleranzbereichs liegt, wobei die Schritte des Vorgebens und Ermittelns wiederholt ausgeführt werden, wenn der Höhenschätzwert außerhalb dieses Toleranzbereichs liegt. Sollte der Höhenschätzwert außerhalb des Toleranzbereichs liegen, wird beispielsweise in dem wiederholten Schritt des Vorgebens ein erneuter Geschwindigkeitsschätzwert für die Geschwindigkeit des Fahrzeugs vorgegeben. Hierbei kann die Schätzung der Höhe des Reflektors solange (beispielsweise rekursiv) fortgesetzt werden, bis die Höhenwerte, an denen der oder die Reflektoren am Fahrzeug positioniert sind, wieder in einem Toleranzbereich liegen und damit eine möglichst akkurate Höhenschätzung der Reflektoren erfolgen. Dabei kann im Schritt des Überprüfens weiterhin überprüft werden, ob der Höhenschätzwert insbesondere innerhalb eines Toleranzbereichs zwischen 0 bis 4 Metern auf oder über einer Fahrbahn liegt. Hierbei bedeutet ein Höhenschätzwert, der außerhalb dieses Toleranzbereiches liegt, die Abweichung einer Höhe des Fahrzeugs vom Normzustand und lässt somit vorteilhaft einen Schluss auf eine inkorrekte Schätzung der Höhe des Reflektors zu.

Gemäß der Erfindung wird im Schritt des Einlesens zumindest ein weiteres Reflexionssignal von einem weiteren Reflektor des Fahrzeugs (beispielsweise zu einem weiteren Zeitpunkt) eingelesen wobei das zumindest weitere Reflexionssignal eine Information zu einer relativen Geschwindigkeit des Fahrzeugs repräsentiert und wobei im Schritt des Ermittelns ein weiterer Höhenschätzwert des weiteren Reflektors unter Verwendung der Information zu der relativen Geschwindigkeit des Fahrzeugs aus dem weiteren Reflexionssignal ermittelt wird. Eine solche Ausführungsform des hier vorgestellten Ansatzes biete den Vorteil, dass beispielsweise durch die Verarbeitung zumindest eines weiteren Reflexionssignals eines weiteren Reflektors, wobei das Reflexionssignal nach einem zeitlichen Versatz nach dem ersten und zweiten Reflexionssignal eingelesen und verarbeitet werden kann, eine weitere Verbesserung und Verifizierung der Höhenschätzung des Fahrzeugs in seiner Gesamtheit ermöglicht wird.

Ferner wird im Schritt des Überprüfens erneut überprüft ob der Höhenschätzwert oder der weitere Höhenschätzwert innerhalb des Toleranzbereichs liegen, wobei die Schritte des Vorgebens und Ermittelns wiederholt ausgeführt werden, wenn der Höhenschätzwert und/oder der weitere Höhenschätzwert außerhalb des Toleranzbereichs liegen. Sollte der Höhenschätzwert oder der weitere Höhenschätzwert außerhalb des Toleranzbereichs liegen, wird der Schritt des Vorgebens wiederholt und ein erneuter Geschwindigkeitsschätzwert für die Geschwindigkeit des Fahrzeugs vorgegeben. Auf diese Weise kann eine sehr präzise Schätzung der Höhe des Reflektors erreicht werden.

Schließlich kann im Schritt des Ermittelns die Höhe des Reflektors des Fahrzeugs unter Verwendung einer bekannten Höhe der Sendeeinrichtung berechnet werden. Vorteilhafterweise ermöglicht eine solche Ausführungsform aus der ermittelten Höhe des Reflektors des Fahrzeugs eine verbesserte Fahrzeugklassifikation und eine genauere Messung einer Fahrzeuggeschwindigkeit.

Es wird zudem eine Vorrichtung zur Schätzung der Höhe eines Reflektors eines Fahrzeugs vorgestellt, die ausgebildet ist, die Schritte des Verfahrens zur Schätzung der Höhe eines Reflektors eines Fahrzeugs in entsprechenden Einrichtungen anzusteuern und/oder auszuführen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Microcontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Ein Ausführungsbeispiel der Erfindung ist in den Zeichnungen rein schematisch dargestellt und wird nachfolgend näher beschrieben. Es zeigt

Fig. 1 eine schematische Darstellung einer Vorrichtung zur Schätzung der Höhe eines Reflektors eines Fahrzeugs basierend auf einer Vorrichtung gemäß einem Ausführungsbeispiel;

Fig. 2 eine schematische Seitenansicht eines Systemaufbaus zur Schätzung der Höhe eines Reflektors eines Fahrzeugs basierend auf einer Vorrichtung gemäß einem Ausführungsbeispiel;

Fig. 3 eine schematische Draufsicht eines Systemaufbaus zur Schätzung der Höhe eines Reflektors eines Fahrzeugs basierend auf einer Vorrichtung gemäß einem Ausführungsbeispiel;

Fig. 4 ein Koordinatensystem zur Darstellung einer Mehrzahl aufgesammelter Reflexionen für ein bestimmtes Zeitintervall gemäß einem Ausführungsbeispiel;

Fig. 5 ein Koordinatensystem zur Darstellung einer Mehrzahl projizierter Reflexionen für ein bestimmtes Zeitintervall gemäß einem Ausführungsbeispiel;

Fig. 6 ein Häufigkeitshistogramm einer Höheverteilung von Reflektoren eines Fahrzeugs für einen Geschwindigkeitsschätzwert gemäß einem Ausführungsbeispiel;

Fig. 7 vier Häufigkeitshistogramme einer Höhenverteilung von Reflektoren eines Fahrzeugs für alternative Geschwindigkeitsschätzwerte gemäß einem Ausführungsbeispiel;

Fig. 8 eine Ansicht eines 3D-Oberflächendiagramms zur dreidimensionalen Darstellung einer Mehrzahl von Reflexionen gemäß einem Ausführungsbeispiel; und

Fig. 9 ein Ablaufdiagramm eines Ausführungsbeispiels eines Verfahrens zur Schätzung der Höhe eines Reflektors eines Fahrzeugs gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

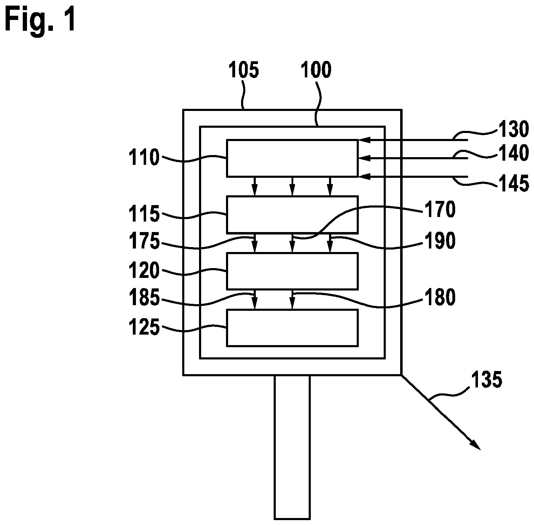

Fig. 1 zeigt eine schematische Darstellung einer Vorrichtung 100 zur Schätzung der Höhe eines Reflektors eines Fahrzeugs gemäß einem Ausführungsbeispiel. Gemäß einem Ausführungsbeispiel ist die Vorrichtung 100 in einer Sendeeinrichtung 105 zur Verkehrsüberwachung verbaut.

Die Vorrichtung 100 weist eine Einleseeinrichtung 110, eine Vorgabeeinrichtung 115 und eine Ermittlungseinrichtung 120 auf. Gemäß einer Ausführungsform weist die Vorrichtung 100 zudem eine Überprüfungseinrichtung 125 auf. Die Einleseeinrichtung 110 ist zunächst ausgebildet, zumindest ein Reflexionssignal 130 von dem Reflektor des Fahrzeugs zu einem Zeitpunkt einzulesen, wobei das zumindest eine Reflexionssignal 130 zumindest eine Information zu einer relativen Geschwindigkeit des Fahrzeugs repräsentiert. Hierbei repräsentiert das zumindest eine Reflexionssignal 130 ferner eine Information zu einem relativen Abstand des Fahrzeugs zu der signalaussendenden Sendeeinrichtung 105, wobei die signalaussendende Sendeeinrichtung 105 vorhergehend ein Sendesignal 135 aussendet, dessen Reflexion das zumindest eine Reflexionssignal 130 bildet, und/oder einen Höhenwinkel, in dem der Reflektor zu der signalaussendenden Sendeeinrichtung 105 angeordnet ist. Die Einleseeinrichtung 110 ist weiterhin ausgebildet, zumindest ein zweites Reflexionssignal 140 von dem Reflektor des Fahrzeugs zu einem zweiten Zeitpunkt einzulesen, wobei das zumindest eine zweite Reflexionssignal 140 ebenso eine Information zu einer relativen Geschwindigkeit des Fahrzeugs repräsentiert. Die Einleseeinrichtung 110 ist schließlich ausgebildet, zumindest ein weiteres Reflexionssignal 145 von einem weiteren Reflektor des Fahrzeugs zu einem weiteren Zeitpunkt einzulesen. Die Vorgabeeinrichtung 115 der Vorrichtung 100 ist nun ausgebildet, einen Geschwindigkeitsschätzwert 170 des Fahrzeugs vorzugeben. Die Ermittlungseinrichtung 120 ist hierbei ausgebildet, einen Höhenschätzwert 180 des Reflektors unter Verwendung des relativen Abstands des Fahrzeugs zu der signalaussendenden Sendeeinrichtung 105 bzw. der Vorrichtung 100 und dem Höhenwinkel, in dem der Reflektor des Fahrzeugs zu der signalaussendenden Sendevorrichtung 105 bzw. der Vorrichtung 100 angeordnet ist, zu ermitteln, wobei der Höhenschätzwert 180 des Reflektors ferner unter Verwendung der Information zu der relativen Geschwindigkeit des Fahrzeugs aus dem zweiten Reflexionssignal 140 ermittelt wird. Hierbei ist die Ermittlungseinrichtung 120 schließlich ausgebildet, unter Verwendung einer bekannten Höhe der Sendeeinrichtung 105, die Höhe des Reflektors des Fahrzeugs zu berechnen. Optional weist die Vorrichtung 100 eine Überprüfungseinrichtung 125 auf, wobei die Überprüfungseinrichtung 125 ausgebildet ist zu überprüfen, ob der Höhenschätzwert 180 innerhalb eines Toleranzbereichs zwischen 0 und 4 Metern über der Fahrbahn liegt, wobei die Vorgabeeinrichtung 115 einen erneuten Geschwindigkeitsschätzwert 175 des Fahrzeugs vorgibt und die Ermittlungseinrichtung 120 einen erneuten Höhenschätzwert 185 des weiteren Reflektors unter Verwendung des relativen Abstands des Fahrzeugs zu der signalaussendenden Sendeeinrichtung 105 und dem Höhenwinkel, in dem der Reflektor zu der signalaussendenden Sendevorrichtung 105 angeordnet ist, ermittelt, wenn der Höhenschätzwert 180 außerhalb dieses Toleranzbereichs liegt. Die Überprüfungseinrichtung 125 ist ferner ausgebildet zu überprüfen, ob der Höhenschätzwert 180 oder der weitere Höhenschätzwert 185 innerhalb dieses Toleranzbereichs liegen, wobei die Vorgabeeinrichtung einen erneuten Geschwindigkeitsschätzwert 190 für die Geschwindigkeit des Fahrzeugs vorgibt, wenn der Höhenschätzwert 180 oder der weitere Höhenschätzwert 185 außerhalb des Toleranzbereichs liegen. Hierbei wiederholt die Überprüfungseinrichtung 125 eine Überprüfung so lange, bis sich die Höhenschätzwerte 180 und 185 innerhalb des Toleranzbereichs liegen.

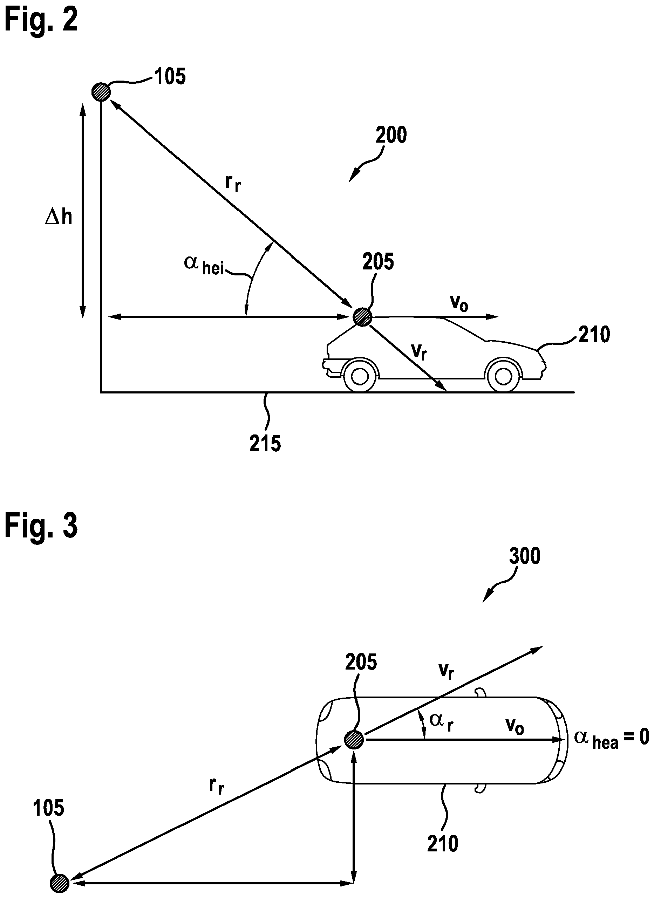

Fig. 2 zeigt eine schematische Seitenansicht eines Systemaufbaus 200 zur Schätzung der Höhe eines Reflektors 205 eines Fahrzeugs 210 basierend auf einer Vorrichtung gemäß einem Ausführungsbeispiel. Der Systemaufbau 200 kann insbesondere unter Verwendung der in Fig. 1 vorgestellten Vorrichtung zur Schätzung der Höhe eines Reflektors 205 eines Fahrzeugs 210 ausgeführt werden. Als Reflektor 205 kann hierbei eine Kante oder Ecke der Karosserie des Fahrzeugs 210 dienen, an dem ein Radarstrahl reflektiert wird und als Reflexionssignal an die Vorrichtung gemäß einem Ausführungsbeispiel zurückreflektiert wird.

Der schematische Systemaufbau 200 umfasst eine an einem Straßenrand aufgebaute signalaussendende Sendeeinrichtung 105, wobei es sich bei der Sendeeinrichtung 105 gemäß einem Ausführungsbeispiel um ein Verkehrsüberwachungssystem, beispielsweise ein Radargerät, handelt. Auf einer Straße bewegt sich ein Fahrzeug 210, wobei es sich gemäß einem Ausführungsbeispiel bei dem Fahrzeug 210 um einen Personenkraftwagen handelt, in eine Fahrtrichtung. Das Fahrzeug 210 weist zumindest den zumindest einen Reflektor 205 auf. Von der Sendeeinrichtung 105 geht ein Sendesignal, beispielsweise ein Radarstrahl (nicht dargestellt), aus, der den Reflektor 205 des Fahrzeugs 210 erfasst. Der Radarstrahl wird hierbei teilweise von dem Reflektor 205 reflektiert und ein reflektiertes Reflexionssignal (nicht dargestellt) wird von der Sendeeinrichtung 105 empfangen und ausgewertet. Wird das Fahrzeug 210 über mehrere Zeitpunkte beobachtet, kann über eine Zuordnung der Reflexionssignale untereinander die Fahrt des Fahrzeugs 210 erfasst werden. Aus der Fahrt kann der relative Winkel des Reflektors 205 geschätzt werden und damit die absolute Fahrzeuggeschwindigkeit $v_0$ bestimmt werden. Die Kenntnis über die Fahrtrichtung des Fahrzeugs 210 hilft bei der korrekten Zuordnung der Reflexionssignale. Für die Zuordnung werden die räumliche Lage der Reflexionen und die relative Fahrzeuggeschwindigkeit $v_r$ verwendet.

Die Sendeeinrichtung 105 ist ausgebildet, drei Größen zu messen: die relative Entfernung bzw. Abstand $r_r$ des Reflektors 205 bzw. des Fahrzeugs 210 zur Sendeeinrichtung 105, den relativen Winkel des Reflektors 205 sowie die Relativgeschwindigkeit $v_r$ des Fahrzeugs 210. Die relative Geschwindigkeit $v_r$ des Fahrzeugs 210 ist die Geschwindigkeit, mit der sich der Reflektor 205 des Fahrzeugs 210 in radialer Richtung auf die Sendeeinrichtung 105 zu- oder wegbewegt. Die relative Geschwindigkeit $v_r$ ist hierbei aber lediglich eine Geschwindigkeitskomponente einer realen absoluten Fahrzeuggeschwindigkeit $v_0$, mit der sich das Fahrzeug 210 in einer Fahrtrichtung auf der Fahrbahn 215 bewegt. Die relative Geschwindigkeit $v_r$ des Fahrzeugs 210 wird unmittelbar aus der Dopplerfrequenz der von dem Reflektor 205 reflektierten Radarstrahlung abgeleitet. Die relative Geschwindigkeit können allerdings auch aus der noch unbekannten absoluten Fahrzeuggeschwindigkeit $v_0$, der Fahrtrichtung des Fahrzeugs und/oder dem Höhenwinkel $\alpha_{hei}$ berechnet werden, wobei sich der Höhenwinkel $\alpha_{hei}$ aus der Höhendifferenz $\Delta h$ zwischen der Sendeeinrichtung 105 und der Fahrbahn 215 ergibt. Bei einer angenommenen Geschwindigkeit des Fahrzeugs 210, wobei es sich um eine grobe Initialschätzung der Fahrzeuggeschwindigkeit handelt, und der bekannten Installationshöhe der Sendeeinrichtung 105 über der Fahrbahn 215, kann die Höhe jedes einzelnen Reflektors 205 des Fahrzeugs 210 analytisch bestimmt werden. Es wird also ein Geschwindigkeitsschätzwert des Fahrzeugs 210 vorgegeben.

Fig. 3 zeigt eine schematische Draufsicht eines Systemaufbaus 300 zur Schätzung der Höhe eines Reflektors 205 eines Fahrzeugs 210 basierend auf einer Vorrichtung gemäß einem Ausführungsbeispiel. Hierbei kann es sich gemäß einem Ausführungsbeispiel bei dem in Fig. 3 gezeigten Systemaufbau 300 um den gleichen Systemaufbau wie in Fig. 2 handeln.

Der schematische Systemaufbau 300 umfasst eine an einem Straßenrand ausgebaute signalaussendende Sendeeinrichtung 105. Auf einer Straße bewegt sich ein Fahrzeug 210 in eine Fahrtrichtung $\alpha_{hea}$. Das Fahrzeug 210 weist zumindest den einen Reflektor 205 auf. Von der Sendeeinrichtung 105 geht ein Sendesignal, beispielsweise ein Radarstrahl (nicht dargestellt), aus, der den Reflektor 205 des Fahrzeugs 210 erfasst. Der Radarstrahl wird hierbei teilweise von dem Reflektor 205 reflektiert und ein reflektiertes Reflexionssignal (nicht dargestellt) wird von der Sendeeinrichtung 105 empfangen und ausgewertet. Wie bereits in Fig. 2 dargestellt, ist die Sendeeinrichtung 105 ausgebildet, drei Größen zu messen: die relative Entfernung $r_r$ des Reflektors 205 bzw. des Fahrzeugs 210 zur Sendeeinrichtung 105, den relativen Winkel $\alpha_r$ des Reflektors 205 sowie die Relativgeschwindigkeit $v_r$ des Fahrzeugs 210. Als relativer Winkel $\alpha_r$ des Reflektors 205 wird der Winkel bezeichnet, der sich vom Reflektor 205 ausgehend zwischen der Achse der Fahrtrichtung $\alpha_{hea}$ und einer Geraden der relativen Geschwindigkeit $v_r$ des Fahrzeugs 210 aufgespannt. Die Ermittlung des relativen Winkels $\alpha_r$ erfolgt nach dem Prinzip der Triangulationsrechnung. Der bekannte Fahrtwinkel $\alpha_{hea}$ bzw. die bekannte Fahrtrichtung $\alpha_{hea}$ des Fahrzeugs 210 und der gemessene relative Winkel $\alpha_r$ des Reflektors 205 fließen in die Höhenschätzung des Reflektors 205 ein, werden aber für eine bessere Veranschaulichung des Verfahrens im Folgenden als jeweils 0° angenommen.

Sind die absolute Geschwindigkeit $v_0$ des Fahrzeugs 210 und die Fahrtrichtung $\alpha_{hea}$ bekannt, kann die Höhe des einzelnen Reflektors 205 in Relation zur Sendeeinrichtung 105 direkt aus der Relativgeschwindigkeit $v_r$ berechnet werden. Für den praktischen Einsatz ist dieser Ansatz jedoch weniger geeignet, da in der Regel zwar die Fahrtrichtung $\alpha_{hea}$, aber nicht die absolute Fahrzeuggeschwindigkeit $v_0$ bekannt ist. Wenn die Fahrtrichtung $\alpha_{hea}$ bekannt ist, gibt es eine Reihe von Annahmen, die beachtet werden sollten. So wird angenommen, dass alle Reflektoren 205 des Fahrzeugs 210 dieselbe Geschwindigkeit besitzen und dieselbe Fahrtrichtung $\alpha_{hea}$ aufweisen. Ferner ergeben sich aus den unterschiedlichen Anordnungshöhen der Reflektoren 205 am Fahrzeug 210 verschiedene Relativgeschwindigkeiten $v_r$, wobei sich dieser Effekt jedoch mit wachsender Entfernung des Fahrzeugs 210 zur Sendeeinrichtung 105 verringert. Schließlich kann der tiefste Höhenwert einer Reflexion nicht unterhalb der Fahrbahn liegen.

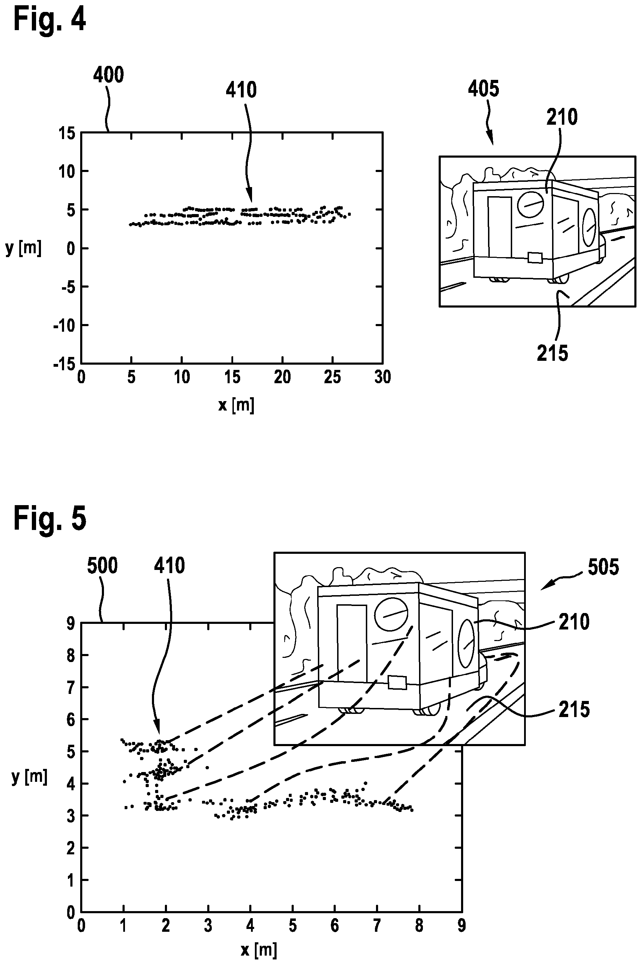

Fig. 4 zeigt ein Koordinatensystem 400 zur Darstellung einer Mehrzahl aufgesammelter Reflexionen 410 für ein bestimmtes Zeitintervall gemäß einem Ausführungsbeispiel. Neben dem Koordinatensystem 400 umfasst die Fig. 4 zudem ein Kamerabild 405 eines auf einer Fahrbahn 215 fahrenden Fahrzeugs 210, wobei es gilt, eine Höhe der Reflektoren dieses Fahrzeugs 210 zu schätzen. Bei dem Fahrzeug 210 handelt es sich gemäß einem Ausführungsbeispiel um einen Kleintransporter.

Das x, y Koordinatensystem 400 zeigt eine Abbildung einer Mehrzahl gesammelter Reflexionen 410 des Reflektors auf einen bestimmten Zeitpunkt oder in einem bestimmten Zeitintervall. So kann es sich bei dem bestimmten Zeitpunkt um den Zeitpunkt handeln, zudem ein erstes Reflexionssignal eingelesen wurde, oder den zweiten Zeitpunkt handeln, zudem ein zweites Reflexionssignal eingelesen wurde, oder um einen weiteren Zeitpunkt handeln, zudem ein weiteres Reflexionssignal eines weiteren Reflektors des Fahrzeugs 210 eingelesen wurde. Die hierbei erfassten Reflexionen werden auf einen Referenzzeitpunkt projiziert, der je nach Ausführungsbeispiel mit einem der oben genannten Zeitpunkte identisch ist oder aber sich von diesen unterscheidet. Gemäß einem Ausführungsbeispiel bildet bzw. projiziert das Koordinatensystem 400 die gesammelten Reflexionen 410 unter Verwendung des Geschwindigkeitsschätzwertes und der bekannten Fahrtrichtung des Fahrzeugs 210 für ein Zeitintervall von 1,7 Sekunden ab. Sind die Modellannahmen wie Geschwindigkeit des Fahrzeugs 210, Fahrtrichtung des Fahrzeugs 210 etc. korrekt, überlagern sich die Reflexionen 410 der jeweiligen Reflektoren alle an einem Zeitpunkt und bilden die Form des Fahrzeugs 210 nach oder zumindest die zwei Seiten der Fahrzeugform, welche eine Reflexion des Radarstrahls bewirken. Hierbei sind in der dargestellten Fig. 4 die Reflexionen zu einem bestimmten Zeitpunkt nahezu deckungsgleich.

Fig. 5 zeigt ein Koordinatensystem 500 zur Darstellung einer Mehrzahl projizierter Reflexionen 410 für ein bestimmtes Zeitintervall gemäß einem Ausführungsbeispiel. Hierbei kann es sich gemäß einem Ausführungsbeispiel bei dem in Fig. 5 gezeigten Koordinatensystem 500 um das gleiche Koordinatensystem wie in Fig. 2 handeln. Neben dem Koordinatensystem 500 umfasst die Fig. 4 ein das Koordinatensystem 500 überlappendes Kamerabild 505 eines auf einer Fahrbahn 215 fahrenden Fahrzeugs 210. Bei dem Fahrzeug 210 handelt es sich gemäß einem Ausführungsbeispiel um einen Kleintransporter.

Das x, y Koordinatensystem 500 zeigt eine Projektion einer Mehrzahl erfasster Reflexionen 410 des Reflektors. Bei einer idealen Projektion, wie in Fig. 5 verdeutlicht ist, werden alle Reflexionen auf ein "L", also die Fahrzeugoberfläche, projiziert. Die lange Seite und die kurze Seite des projizierten "L" stehen dabei senkrecht aufeinander. Die Streuung oder der räumliche Abstand der Reflexionen 410 von den Achsen ist dabei minimal. Die projizierten Reflexionen 410 werden mit dem Kamerabild 505 verknüpft, um grafisch darzustellen, von welchen Reflektoren des Fahrzeugs 210 die projizierten Reflexionen 410 stammen. Hierbei ist es allerdings nicht zwingend erforderlich, dass ein "L" ausgebildet wird. Je nach den Reflexionseigenschaften des Fahrzeugs 210, kann auch nur die kurze oder lange Seite des "L" erfasst werden. Es gilt allerdings, dass alle gesammelten Reflexionen 410, die zu demselben Fahrzeug 210 gehören, auf eine gemeinsame Objektgeschwindigkeit projiziert werden können.

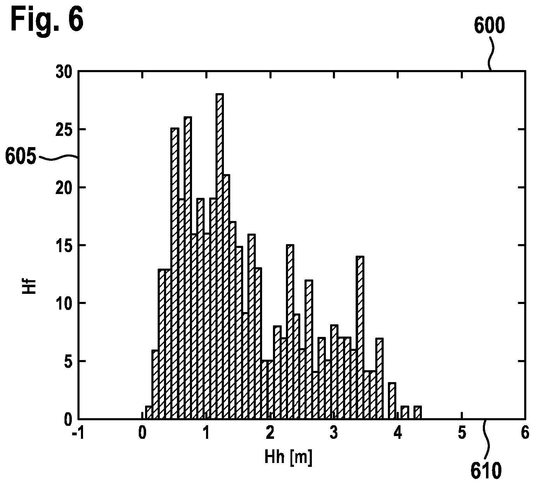

Fig. 6 zeigt ein Häufigkeitshistogramm 600 einer Höhenverteilung von Reflektoren eines Fahrzeugs für einen Geschwindigkeitsschätzwert gemäß einem Ausführungsbeispiel. Bei dem hier gezeigten Häufigkeitshistogramm 600 handelt es sich um ein Beispiel für ein Histogramm mit konstanter Klassenbreite, bei dem die absoluten Häufigkeiten (Hf) der projizierten Reflexionen auf der Ordinate 605 abgetragen sind. Auf der Abszisse 610 ist hingegen die Höhenverteilung abgetragen, wobei die Höhenverteilung Werte zwischen -1 Meter bis 6 Meter umfasst. Der Höhenschätzwert sollte allerdings innerhalb eines Toleranzbereichs zwischen 0 bis 4 Metern über einer Fahrbahn liegen.

Eine analytische Bestimmung der relativen Höhe (Hh) eines jeden Reflektors des Fahrzeugs erfolgt unter Verwendung des Geschwindigkeitsschätzwertes. Hierfür kann die folgende Formel verwendet werden:

$$v_o = \frac{v_r}{\cos(\alpha_{height}) \cdot \cos(\alpha_{head} + \alpha_r)}$$

Es wird ein Geschwindigkeitsschätzwert von 21,0822 m/s angenommen. Daraus ergibt sich eine Verteilung von Reflektoren über die Höhe. Je nachdem, ob die angenommene Geschwindigkeit zu hoch oder zu tief ist, befindet sich die Höhenverteilung der Reflexionen über (> 0 Meter) oder unter (< 0 Meter) der Fahrbahnebene. Analytisch oder iterativ kann die angenommene Geschwindigkeit so korrigiert werden, dass die Unterkante der Höhenverteilung sich auf der Höhe der Fahrbahnebene bei 0 Metern hält und die Oberkante der Höhenverteilung 4 Meter nicht übersteigt. Durch weitere Eingrenzungen und/oder diverse Modellannahmen kann die Ziel-Höhenverteilung weiter eingeschränkt werden. Hieraus ergeben sich schließlich die absolute Geschwindigkeit des Fahrzeugs und die Höhe jedes Reflektors über der Fahrbahn.

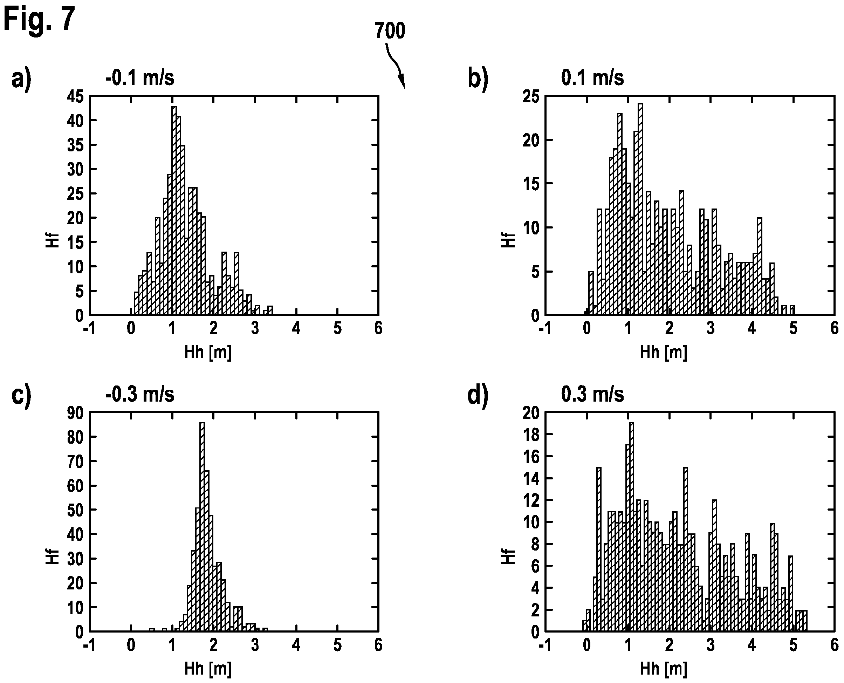

Fig. 7 zeigt vier Häufigkeitshistogramme 700 einer Höhenverteilung von Reflektoren eines Fahrzeugs für alternative Geschwindigkeitsschätzwerte gemäß einem Ausführungsbeispiel. In Fig. 7 sind für das in Fig. 6 verwendete Beispiel verschiedene alternative Geschwindigkeiten abgebildet. Die absoluten Häufigkeiten (Hf) der projizierten Reflexionen sind je auf der Ordinate abgetragen, wobei auf der Abszisse die Verteilung der Höhen (Hh) abgetragen ist, die Werte zwischen -1 Meter bis 6 Meter umfasst. Der Höhenschätzwert sollte allerdings innerhalb eines Toleranzbereichs zwischen 0 bis 4 Metern über einer Fahrbahn liegen. So wurde in Abbildung 7a der Geschwindigkeitsschätzwert von 21,0822 m/s um -0,1 m/s nach unten korrigiert, in Abbildung 7b der Geschwindigkeitsschätzwert von 21,0822 m/s um +0,1 m/s nach oben korrigiert, in Abbildung 7c der Geschwindigkeitsschätzwert von 21,0822 m/s um -0,3 m/s nach unten korrigiert und in Abbildung 7d der Geschwindigkeitsschätzwert von 21,0822 m/s um +0,3 m/s nach oben korrigiert. Eine Korrektur des Geschwindigkeitsschätzwertes erfolgt so, dass die Höhenverteilung bestimmten Angaben genügt. Hierbei treten Reflexionen nicht oberhalb der Toleranzgrenze von 4 Metern auf, die Fahrzeuge schweben nicht über der Fahrbahn, aber in Bodennähe treten dennoch nur wenige Reflexionen auf. In Abbildung 7b und d wurde der Geschwindigkeitsschätzwert je um 0,1 m/s bzw. 0,3 n/s erhöht. In der Höhenverteilung sind jetzt Reflexionen oberhalb von 4 Metern zu finden. In Abbildung 7c treten Reflexionen erst über 1 Meter Höhe auf. Abbildung 7a, bei der die Geschwindigkeit um -0,1 m/s reduziert ist, erfüllt hingegen die gestellten Annahmen.

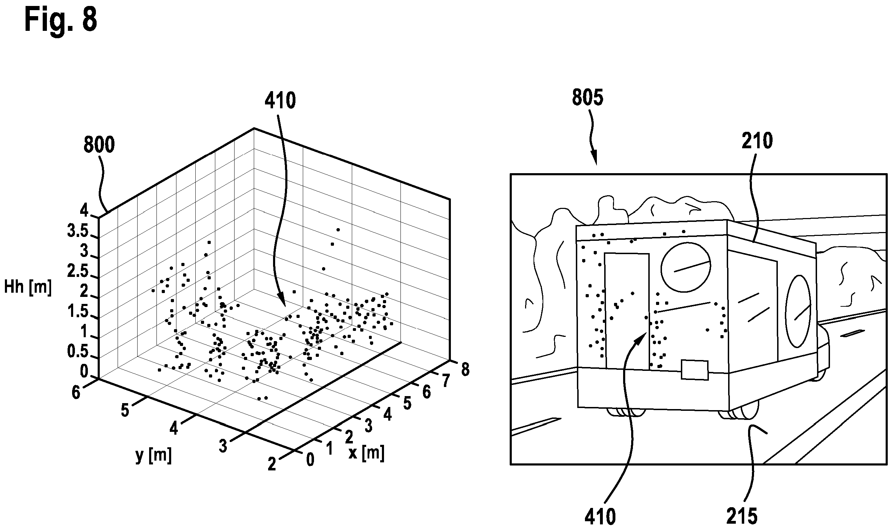

Fig. 8 zeigt eine Ansicht eines 3D-Oberflächendiagramms 800 zur dreidimensionalen Darstellung einer Mehrzahl von Reflexionen 410 gemäß einem Ausführungsbeispiel. Hierbei kann es sich gemäß einem Ausführungsbeispiel bei dem in Fig. 8 gezeigten 3D-Oberflächendiagramms 800 um eine räumliche Ausführung des Koordinatensystems aus Fig. 5 handeln. Neben dem 3D-Oberflächendiagramm 800 zeigt die Fig. 8 ein Kamerabild 805 eines auf einer Fahrbahn 215 fahrenden Fahrzeugs 210. Bei dem Fahrzeug 210 handelt es sich gemäß einem Ausführungsbeispiel um einen Kleintransporter.

Das 3D-Oberflächendiagramm 800 ist ein dreidimensionales Diagramm, das einer Untersuchung von erwünschten Ansprechwerten nützlich ist. Hierbei wird eine Differenz des Geschwindigkeitsschätzwerts von 21,0822 m/s und des Korrekturwertes - 0,1 m/s aus der Fig. 7 gebildet (= 20,9822 m/s), wobei sich hieraus eine dreidimensionale Ansicht der Reflexionen 410 ergibt. Das 3D-Oberflächendiagramm 800 zeigt hierbei, wie sich eine Antwortvariable auf zwei Prädiktorvariablen bezieht. Das Oberflächendiagramm 800 enthält die folgenden Elemente: Prädiktoren auf der x- und y-Achse und eine kontinuierliche Oberfläche, die die Antwortwerte auf der z-Achse darstellt, wobei es sich bei den Antwortwerten um eine Höhenverteilung der Reflexionen 410 handelt. Die dreidimensionalen Punkte der Höhenverteilung der Reflexionen 410 werden auf das Kamerabild 805 übertragen, wobei die Form des Fahrzeugs 210 und markante Reflektorpositionen hierbei deutlich erkennbar sind.

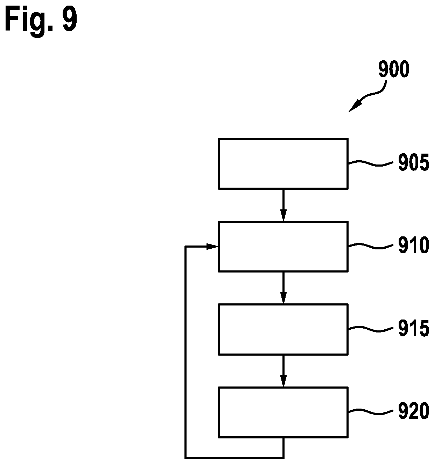

Fig. 9 zeigt ein Ablaufdiagramm eines Ausführungsbeispiels eines Verfahrens 900 zur Schätzung der Höhe eines Reflektors eines Fahrzeugs gemäß einem Ausführungsbeispiel. Das Verfahren 900 kann unter Verwendung der in Fig. 1 vorgestellten Vorrichtung zur Schätzung der Höhe eines Reflektors eines Fahrzeugs ausgeführt werden.

Das Verfahren 900 weist zunächst einen Schritt 905 auf, bei dem zumindest ein Reflexionssignal von dem Reflektor des Fahrzeugs zu einem Zeitpunkt eingelesen wird, wobei das zumindest eine Reflexionssignal zumindest eine Information zu einer relativen Geschwindigkeit des Fahrzeugs repräsentiert. Ferner weist das Verfahren 900 einen Schritt 910 auf, bei dem ein Geschwindigkeitsschätzwert des Fahrzeugs vorgegeben wird. Das Verfahren 900 weist weiterhin einen Schritt 915 auf, bei dem ein Höhenschätzwert des Reflektors unter Verwendung der relativen Geschwindigkeit des Fahrzeugs und des Geschwindigkeitsschätzwerts des Fahrzeugs ermittelt wird. Schließlich kann das Verfahren 900 einen Schritt 920 aufweisen, bei dem überprüft wird, ob der Höhenschätzwert innerhalb eines Toleranzbereichs liegt, wobei die Schritte 910 und 915 wiederholt werden, wenn der Höhenschätzwert außerhalb dieses Toleranzbereichs liegt, insbesondere wobei im wiederholten Schritt 910 ein erneuter Geschwindigkeitsschätzwert für die Geschwindigkeit des Fahrzeugs vorgegeben wird.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

**Patentansprüche**

1. Verfahren (900) zur Schätzung der Höhe eines Reflektors (205) eines Fahrzeugs (210), wobei das Verfahren (900) die folgenden Schritte aufweist:

    Einlesen (905) zumindest eines Reflexionssignals (130) von dem Reflektor (205) des Fahrzeugs (210) zu einem Zeitpunkt, wobei eine signalaussende Sendeeinrichtung (105) vorhergehend ein Sendesignal (135) aussendet, dessen Reflexion das zumindest eine Reflexionssignal (130) bildet, wobei das zumindest eine Reflexionssignal (130) zumindest eine Information zu einer relativen Geschwindigkeit ($v_r$) des Fahrzeugs (210) repräsentiert und wobei ein weiteres Reflexionssignal (145) von einem weiteren Reflektor des Fahrzeugs (210) eingelesen wird, wobei das zumindest weitere Reflexionssignal (145) eine Information zu einer relativen Geschwindigkeit ($v_r$) des Fahrzeugs (210) repräsentiert;
    Vorgeben (910) eines Geschwindigkeitsschätzwertes (170) des Fahrzeugs (210); und Ermitteln (915) eines Höhenschätzwertes (180) des Reflektors (205) unter Verwendung der relativen Geschwindigkeit ($v_r$) des Fahrzeugs (210) und des Geschwindigkeitsschätzwertes (170) des Fahrzeugs (210) und unter Verwendung des relativen Abstands des Fahrzeugs zu der signalaussenden Sendeeinrichtung und wobei ein weiterer Höhenschätzwert (185) des weiteren Reflektors unter Verwendung der Information zu der relativen Geschwindigkeit ($v_r$) des Fahrzeugs (210) aus dem weiteren Reflexionssignal (145) ermittelt wird und mit einem Schritt des Überprüfens, wobei im Schritt des Überprüfens (920) überprüft wird, ob der Höhenschätzwert (180) oder der weitere Höhenschätzwert (185) innerhalb eines Toleranzbereichs liegen, wobei die Schritte des Vorgebens (910) und des Ermittelns (915) wiederholt ausgeführt werden, wenn der Höhenschätzwert (180) und/oder der weitere Höhenschätzwert (185) außerhalb des Toleranzbereichs liegen, wobei im wiederholten Schritt des Vorgebens (910) ein erneuter Geschwindigkeitsschätzwert (190) für die Geschwindigkeit des Fahrzeugs (210) vorgegeben wird, so dass sich die Geschwindigkeit des Fahrzeugs ergibt.

2. Verfahren (900) gemäß einem der vorangegangenen Ansprüche, bei dem im Schritt des Einlesens (905) zumindest ein zweites Reflexionssignal (140) von dem Reflektor (205) des Fahrzeugs (210) zu einem zweiten Zeitpunkt eingelesen wird, wobei das zumindest eine zweite Reflexionssignal (140) eine Information zu einer relativen Geschwindigkeit ($v_r$) des Fahrzeugs (210) repräsentiert, wobei im Schritt des Ermittelns (915) der Höhenschätzwert (180) des Reflektors (205) ferner unter Verwendung der Information zu der relativen Geschwindigkeit ($v_r$) des Fahrzeugs (210) aus dem zweiten Reflexionssignal (140) ermittelt wird.

3. Verfahren (900) gemäß einem der vorhergehenden Ansprüche, bei dem im Schritt des Überprüfens (920) überprüft wird, ob der Höhenschätzwert (180) innerhalb eines Toleranzbereichs zwischen 0 bis 4 Metern auf oder über einer Fahrbahn (215) liegt.

4. Verfahren (900) gemäß einem der vorangegangenen Ansprüche, bei dem im Schritt des Ermittelns (915) die Höhe des Reflektors (205) des Fahrzeugs (210) unter Verwendung einer bekannten Höhe der Sendeeinrichtung (105) berechnet wird.

5. Vorrichtung (100) zur Schätzung der Höhe eines Reflektors (205) eines Fahrzeugs (210), die ausgebildet ist, die Schritte eines Verfahrens (900) gemäß einem der Ansprüche 1 bis 4 in der Sendeeinrichtung (105) anzusteuern und/oder auszuführen, wobei die Vorrichtung mindestens folgende Komponenten enthält:eine Sendeeinrichtung (105), eine Einlesevorrichtung (100) zum Einlesen von Reflexionssignalen, eine Vorgabevorrichtung (115) zu Vorgabe von Geschwindigkeitsschätzwerten, eine Ermittlungseinrichtung (120) zur Ermittlung von Höhenschätzwerten sowie der Reflektorhöhe und der Geschwindigkeit des Fahrzeuges.

6. Computer-Programmprodukt mit Programmcode zur Durchführung des Verfahrens (900) nach einem der Ansprüche 1 bis 4, wenn das Programmprodukt auf einer Vorrichtung (100) gemäß Anspruch 5 ausgeführt wird.

**Claims**

1. Method (900) for estimating the height of a reflector (205) of a vehicle (210), wherein the method (900) comprises the following steps:

    reading in (905) at least one reflection signal (130) from the reflector (205) of the vehicle (210) at a point in time, wherein a signal-emitting transmitting device (105) previously sends a transmission signal (135), the reflection of which forms the at least one reflection signal (130), wherein the at least one reflection signal (130) represents at least one piece of information relating to a relative speed ($v_r$) of the vehicle (210) and wherein a further reflection signal (145) from a further reflector of the vehicle (210) is read in, wherein the at least one further reflection signal (145) represents a piece of information relating to a relative speed ($v_r$) of the vehicle (210); specifying (910) a speed estimation value (170) of the vehicle (210); and determining (915) a height estimation value (180) of the reflector (205) using the relative speed ($v_r$) of the vehicle (210) and the speed estimation value (170) of the vehicle (210) and using the relative distance of the vehicle from the signal-emitting transmitting device and wherein a further height estimation value (185) of the further reflector is determined from the further reflection signal (145) using the information relating to the relative speed ($v_r$) of the vehicle (210) and with a checking step, wherein, in the checking step (920), it is checked whether the height estimation value (180) or the further height estimation value (185) is within a tolerance range, wherein the specifying step (910) and determining step (915) are carried out repeatedly if the height estimation value (180) and/or the further height estimation value (185) are outside the tolerance range, wherein, in the repeated specifying step (910), a re-estimated speed estimation value (190) is specified for the speed of the vehicle (210), and so the speed of the vehicle can be found.

2. Method (900) according to the preceding claim, in which, in the reading-in step (905), at least one second reflection signal (140) from the reflector (205) of the vehicle (210) is read in at a second point in time, wherein the at least one second reflection signal (140) represents a piece of information relating to a relative speed ($v_r$) of the vehicle (210), wherein, in the determining step (915), the height estimation value (180) of the reflector (205) is also determined from the second reflection signal (140) using the information relating to the relative speed ($v_r$) of the vehicle (210).

3. Method (900) according to any of the preceding claims, in which, in the checking step (920), it is checked whether the height estimation value (180) is within a tolerance range between 0 to 4 meters on or above a roadway (215).

4. Method (900) according to any of the preceding claims, wherein, in the determining step (915), the height of the reflector (205) of the vehicle (210) is calculated using a known height of the transmitting device (105).

5. Device (100) for estimating the height of a reflector (205) of a vehicle (210), which device is designed to control and/or execute the steps of a method (900) according to any of claims 1 to 4 in the transmitting device (105), wherein the device contains at least the following components: a transmitting device (105), a reading-in device (100) for reading in reflection signals, a specification device (115) for specifying speed estimation values, a determination device (120) for determining height estimation values, and the reflector height and the speed of the vehicle.

6. Computer program product having program code for implementing the method (900) according to any of claims 1 to 4 when the program product is executed on a device (100) according to claim 5.

**Revendications**

1. Procédé (900) d'estimation de la hauteur d'un réflecteur (205) d'un véhicule (210), le procédé (900) comprenant les étapes suivantes :

lecture (905) d'au moins un signal de réflexion (130) provenant du réflecteur (205) du véhicule (210) à un moment, dans lequel un moyen d'émission (105) qui émet des signaux émet préalablement un signal d'émission (135) dont la réflexion forme l'au moins un signal de réflexion (130), dans lequel l'au moins un signal de réflexion (130) représente au moins une information concernant une vitesse relative ($v_r$) du véhicule (210) et dans lequel un signal de réflexion supplémentaire (145) provenant d'un réflecteur supplémentaire du véhicule (210) est lu, dans lequel l'au moins un signal de réflexion supplémentaire (145) représente une information concernant une vitesse relative ($v_r$) du véhicule (210) ; spécification (910) d'une estimation de vitesse (170) du véhicule (210) ; et détermination (915) d'une estimation de hauteur (180) du réflecteur (205) en utilisant la vitesse relative ($v_r$) du véhicule (210) et l'estimation de vitesse (170) du véhicule (210) et en utilisant la distance relative du véhicule par rapport au moyen d'émission qui émet des signaux et dans lequel une estimation de hauteur supplémentaire (185) du réflecteur supplémentaire est déterminée à partir du signal de réflexion supplémentaire (145), en utilisant l'information concernant la vitesse relative ($v_r$) du véhicule (210) et comportant une étape de vérification, dans lequel, à l'étape de vérification (920), il est vérifié que l'estimation de hauteur (180) ou l'estimation de hauteur supplémentaire (185) se situent dans une plage de tolérance, dans lequel les étapes de spécification (910) et de détermination (915) sont exécutées de façon répétée lorsque l'estimation de hauteur (180) et/ou l'estimation de hauteur supplémentaire (185) se situent en dehors de la plage de tolérance, dans lequel, à l'étape répétée de spécification (910), une nouvelle estimation de vitesse (190) est spécifiée pour la vitesse du véhicule (210) de telle sorte que la vitesse du véhicule en découle.

2. Procédé (900) selon l'une des revendications précédentes, dans lequel, à l'étape de lecture (905), au moins un second signal de réflexion (140) provenant du réflecteur (205) du véhicule (210) est lu à un second moment, dans lequel l'au moins un second signal de réflexion (140) représente une information concernant une vitesse relative ($v_r$) du véhicule (210), dans lequel, à l'étape de détermination (915), l'estimation de hauteur (180) du réflecteur (205) est en outre déterminée à partir du second signal de réflexion (140) en utilisant l'information concernant la vitesse relative ($v_r$) du véhicule (210).

3. Procédé (900) selon l'une des revendications précédentes, dans lequel, à l'épate de vérification (920), il est vérifié que l'estimation de hauteur (180) se situe dans une plage de tolérance entre 0 et 4 mètres sur ou au-dessus d'une chaussée (215).

4. Procédé (900) selon l'une des revendications précédentes, dans lequel, à l'étape de détermination (915), la hauteur du réflecteur (205) du véhicule (210) est calculée en utilisant une hauteur connue du moyen d'émission (105).

5. Dispositif (100) d'estimation de la hauteur d'un réflecteur (205) d'un véhicule (210), lequel dispositif est conçu pour commander et/ou exécuter, dans le moyen d'émission (105), les étapes d'un procédé (900) selon l'une des revendications 1 à 4, le dispositif comprenant au moins les composants suivants : un moyen d'émission (105), un dispositif de lecture (100) permettant de lire des signaux de réflexion, un dispositif de spécification (115) permettant de spécifier des estimations de vitesse, un moyen de détermination (120) permettant de déterminer des estimations de hauteur ainsi que des hauteurs de réflecteur et la vitesse du véhicule.

6. Produit programme informatique comprenant un code de programme permettant de mettre en oeuvre le procédé (900) selon l'une des revendications 1 à 4 lorsque le produit programme est exécuté sur un dispositif (100) selon la revendication 5.

# Fig. 1

# Fig. 2

# Fig. 3

## Fig. 4

## Fig. 5

Fig. 6

Fig. 7

700

a) -0.1 m/s

b) 0.1 m/s

c) -0.3 m/s

d) 0.3 m/s

EP 3 759 517 B1

**Fig. 8**

EP 3 759 517 B1

# Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016014060 A1

- CN 105047020 A